# FASCICULE DE BREVET EUROPEEN

(11) **EP 3 151 032 B1**
(45) Date de publication et mention de la délivrance du brevet: **19.06.2019**
(21) Numéro de dépôt: 16290184.7
(22) Date de dépôt: 27.09.2016
(51) Int. Cl.: G01S 5/16, G01S 3/782, G01S 7/495, F41G 7/22

(54) **PROCEDE ET DISPOSITIF POUR DETERMINER LA DISTANCE SEPARANT UN RECEPTEUR AERIEN ET UN EMETTEUR TERRESTRE FIXE**
VERFAHREN UND VORRICHTUNG ZUR BESTIMMUNG DER ENTFERNUNG ZWISCHEN EINEM LUFTEMPFÄNGER UND EINEM FESTEN TERRESTRISCHEN SENDER
METHOD AND DEVICE FOR DETERMINING THE DISTANCE SEPARATING AN AERIAL RECEIVER AND A FIXED GROUND TRANSMITTER

(30) Priorité: 02.10.2015 FR 1502052
(43) Date de publication de la demande: 05.04.2017
(73) Titulaire: MBDA France, 92350 Le Plessis-Robinson (FR)
(72) Inventeur: Rocher, Hélène, 92358 Le Plessis Robinson (FR); Garrigues, Pierre, 92358 Le Plessis Robinson (FR)
(74) Mandataire: Gevers & Orès

(56) Documents cités:
- FR-A1- 3 017 480
- US-A- 4 954 837
- US-A1- 2008 074 639
- US-A1- 2008 191 926
- US-A1- 2011 309 983
- US-A1- 2013 120 192
- US-B2- 7 107 179

## Description

La présente invention concerne un procédé et un dispositif pour déterminer la distance séparant un récepteur aérien de position connue et un émetteur terrestre fixe.

Quoique les applications dudit procédé puissent être diverses, la présente invention est particulièrement appropriée à être mise en oeuvre dans un détecteur de départ de missile qui est monté à bord d'un aéronef (par exemple un avion ou un autre missile) et dont l'objet est de protéger ledit aéronef contre un missile d'attaque hostile tiré depuis le sol. Pour ce faire, de façon connue, un détecteur de départ de missile comporte un imageur infrarouge (le récepteur aérien) apte à détecter l'émission infrarouge (l'émetteur terrestre fixe) produite par la flamme du propulseur dudit missile d'attaque et à émettre une alarme à bord dudit aéronef à protéger.

Ci-après, la présente invention sera plus spécialement décrite en se rapportant à un tel détecteur de départ de missile.

L'imageur infrarouge d'un détecteur de départ de missile est apte, par sa ligne de visée, à indiquer la direction dans laquelle se produit l'émission infrarouge du tir du missile d'attaque, mais ne peut fournir la distance séparant ce dernier de l'aéronef à protéger. Or, les caractéristiques de sensibilité et de champ dudit imageur infrarouge sont élevées, de sorte que celui-ci détecte de nombreuses sources infrarouges autres que l'émission infrarouge du tir du missile d'attaque et qu'il peut en résulter de fausses alarmes. Pour éviter ce dernier inconvénient, un détecteur de départ de missile doit fonctionner selon des algorithmes complexes aptes à éliminer ces fausses alarmes, ou à tout le moins à en diminuer le nombre.

Bien entendu, de tels algorithmes complexes nuisent à la rapidité d'identification d'une vraie alarme, ce qui limite, pour l'aéronef à protéger, le temps de réaction à un tir de missile d'attaque hostile.

Par ailleurs, par le document US-2011/309983, on connaît un procédé pour déterminer la distance séparant un récepteur aérien et un émetteur fixe, en utilisant un modèle numérique de terrain.

La présente invention a notamment pour objet de remédier aux inconvénients précités en permettant à un détecteur de départ de missile de déterminer rapidement et avec précision la distance le séparant d'une source infrarouge.

Ainsi, grâce à la connaissance de cette distance, le détecteur de départ de missile peut interpréter l'intensité infrarouge apparente (fonction de la distance) qu'il reçoit de ladite source infrarouge et identifier la nature de cette dernière.

À cette fin, selon l'invention, le procédé pour déterminer en continu la distance séparant un récepteur aérien mobile de façon connue sur une trajectoire connue et un émetteur terrestre fixe, ledit émetteur étant observé par ledit récepteur suivant une ligne de visée de direction variable avec le déplacement dudit récepteur, est remarquable en ce qu'on réalise les opérations suivantes :
a') par la mise en oeuvre d'un modèle numérique de terrain qui est représentatif de la partie de terrain dans laquelle se trouve ledit émetteur fixe et qui indique la hauteur maximale et la hauteur minimale de cette partie de terrain, on détermine, pour chacune d'une pluralité de positions successives dudit récepteur aérien le long de sa trajectoire, une valeur de distance maximale et une valeur de distance minimale délimitant une plage de valeurs de distance dans laquelle se trouve la valeur réelle de la distance entre ledit récepteur et ledit émetteur à la position correspondante dudit récepteur aérien ;
b') à chacune desdites positions successives dudit récepteur aérien, on mesure la valeur de l'angle d'azimut et la valeur de l'angle de hauteur de la direction correspondante de ladite ligne de visée ;
c') pour chacun d'une pluralité de points de la partie dudit modèle numérique de terrain comprise dans chacune desdites plages de valeurs de distance obtenues à l'étape a'), on calcule la distance théorique séparant ledit point et ledit récepteur, ainsi que les valeurs de l'angle d'azimut théorique et de l'angle de hauteur théorique de la direction de ladite distance théorique ;
d') on compare les suites des valeurs mesurées d'angle d'azimut et d'angle de hauteur pour ladite ligne de visée, obtenues à l'étape b'), respectivement aux suites de valeurs d'angle d'azimut théorique et d'angle de hauteur théorique obtenues à l'étape c') ; et
e') on considère que l'évolution de la distance réelle entre le récepteur et l'émetteur, lorsque ledit récepteur se déplace sur sa trajectoire, est représentée par l'évolution de la distance théorique calculée à l'étape c'), pour laquelle les suites de valeurs d'angle d'azimut théorique et d'angle de hauteur théorique sont respectivement les plus proches des suites de valeurs mesurées d'angle d'azimut et d'angle de hauteur de ladite ligne de visée.

On remarquera que, contrairement à la plupart des procédés de mesure de distance, comme exemple la triangulation, la précision de la détermination de la distance émetteur-récepteur est indépendante de la vitesse de déplacement du récepteur, cette précision étant aussi bonne pour une faible vitesse que pour une vitesse élevée de ce dernier.

La présente invention concerne de plus un dispositif de détection infrarouge :
- qui est monté à bord d'un aéronef muni d'un dispositif de positionnement permettant de connaître la position dudit aéronef à chaque instant, et
- qui comporte un détecteur infrarouge apte à détecter une émission infrarouge terrestre, ainsi que des moyens de mesure indiquant la direction de la ligne de visée sous laquelle ledit détecteur infrarouge observe ladite émission infrarouge,
ce dispositif de détection infrarouge étant remarquable :
- en ce que lesdits moyens de mesure délivrent des valeurs d'angle d'azimut et d'angle de hauteur pour la direction de ladite ligne de visée ; et
- en ce que ledit dispositif de détection comporte de plus :
   - un modèle numérique de terrain qui est représentatif du terrain dans lequel se trouve ladite émission infrarouge terrestre et qui indique la hauteur maximale et la hauteur minimale dudit terrain ; et
   - des moyens de calcul configurés :
      ∘ pour calculer une valeur de distance minimale et une valeur de distance maximale entre lesquelles se trouve la valeur réelle de la distance séparant ledit détecteur infrarouge de ladite émission infrarouge terrestre ;
      ∘ pour calculer une pluralité de distances théoriques intermédiaires comprises entre ladite valeur de distance minimale et ladite valeur de distance maximale ;
      ∘ pour calculer pour chacune desdites distances théoriques intermédiaires, l'angle d'azimut et l'angle de hauteur de la direction correspondante ; et
      ∘ pour comparer les valeurs calculées de l'angle d'azimut et de l'angle de hauteur de chacune desdites distances théoriques intermédiaires avec les valeurs mesurées de l'angle d'azimut et de l'angle de hauteur de la direction de ladite ligne de visée.

De plus, selon l'invention, lesdits moyens de calcul sont configurés pour attribuer à chaque instant, à la distance séparant le détecteur infrarouge de ladite émission infrarouge terrestre, la valeur de la distance théorique intermédiaire dont les valeurs calculées de l'angle d'azimut et de l'angle de hauteur sont respectivement les plus proches des valeurs mesurées de l'angle d'azimut et de l'angle de hauteur de la direction de ladite ligne de visée.

En outre, selon l'invention, lesdits moyens de calcul sont configurés pour assimiler l'évolution temporelle de la distance séparant le détecteur infrarouge de ladite infrarouge terrestre à une évolution temporelle de distance théorique intermédiaire pour laquelle des suites de valeurs calculées d'angle d'azimut théorique et d'angle de hauteur théorique sont respectivement les plus proches des suites de valeurs mesurées d'angle d'azimut et d'angle de hauteur de ladite ligne de visée.

On comprendra aisément que la présente invention concerne de plus un dispositif de détection de départ de missile comportant les particularités du dispositif de détection infrarouge décrit ci-dessus, ainsi qu'un aéronef, notamment un missile, comportant un tel dispositif de détection de départ de missile.
Les figures du dessin annexé feront bien comprendre comment l'invention peut être réalisée. Sur ces figures, des références identiques désignent des éléments semblables.
La figure 1 est un schéma illustrant le fondement de la présente invention.
La figure 2 illustre l'angle d'azimut et l'angle de hauteur de la ligne de visée d'un récepteur.
Les figures 3A et 3B sont des diagrammes temporels représentant respectivement les évolutions d'angles d'azimut et d'angles de hauteur en fonction de positions successives du récepteur.
La figure 4 est le schéma synoptique du dispositif de détection conforme à la présente invention.

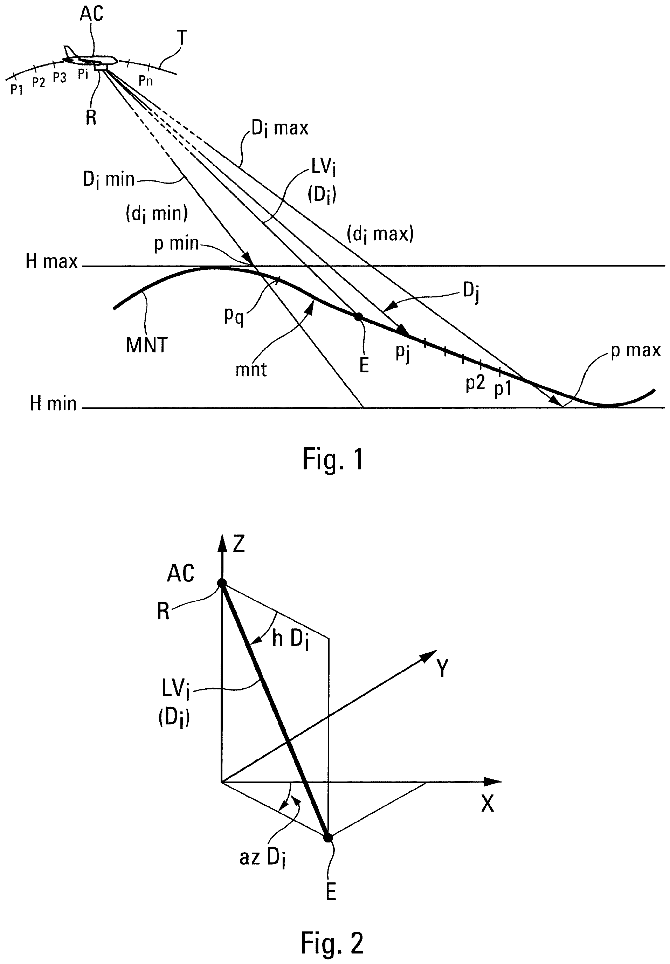

Sur la figure 1, on a représenté schématiquement un aéronef AC décrivant une trajectoire T et portant un récepteur infrarouge R. À chaque instant ti (avec i = 0, 1, 2, 3,... n entier), la position Pi de l'aéronef AC (et donc celle du récepteur infrarouge R) est connue avec une précision ΔP dans un système d'axes X (latitude), Y (longitude) et Z (altitude), comme cela est illustré par la figure 2.

L'aéronef AC survole un terrain représenté par un modèle numérique de terrain MNT, de précision ΔMNT, indiquant l'altitude minimale Hmin et l'altitude maximale Hmax dudit terrain. Sur celui-ci se trouve un émetteur infrarouge E observé par le récepteur infrarouge R selon la ligne de visée LVi, lorsque l'aéronef AC est en position Pi. Comme l'illustre la figure 2, la direction Di de la ligne de visée LVi peut être définie par son angle de hauteur hDi et par son angle d'azimut azDi, avec une précision ΔD.

Du fait de l'incertitude ΔP sur la précision de la position de l'aéronef AC, de l'incertitude ΔMNT sur la précision du modèle numérique de terrain MNT et de l'incertitude ΔD sur la précision de la direction Di de la ligne de visée LVi, cette dernière direction Di ne peut être connue que comme comprise entre une direction maximale Dimax et une distance minimale Dimin.

Par suite, la distance réelle entre le récepteur R et l'émetteur E est comprise entre une distance minimale Dimin, correspondant à la distance séparant le récepteur R et le point pmin d'intersection entre la direction Dimin et l'altitude maximale Hmax, et une distance maximale Dimax, correspondant à la distance séparant le récepteur R et le point pmax d'intersection entre la direction Dimax et l'altitude minimale Hmin. La distance réelle entre le récepteur R à la position Pi et l'émetteur E est donc comprise entre Dimin et Dimax, qui déterminent une plage de valeurs de distance ΔD.

Ainsi, conformément à la présente invention, on commence par déterminer, de la façon décrite ci-dessus, la plage de valeurs de distance ΔD dans laquelle se trouve la valeur réelle de la distance entre le récepteur R à la position Pi et l'émetteur E.

Puis, à l'aide des instruments de bord de l'aéronef AC, on mesure la valeur azDi de l'angle d'azimut et la valeur hDi de l'angle de hauteur de la ligne de visée LVi du récepteur R.

Par ailleurs, pour chacun d'une pluralité de points Pj (avec j = 2, 3,..., j, ..., q entier) de la partie mnt du modèle numérique MNT comprise dans ladite plage de valeurs de distance ΔD, on calcule la distance théorique dj séparant ce point pj du récepteur R, ainsi que les valeurs azj de l'angle d'azimut théorique et hj de l'angle de hauteur théorique de la direction Dj de ladite distance théorique dj. Après quoi, on compare les valeurs mesurées azDi et hDi de l'angle d'azimut et de l'angle de hauteur de la ligne de visée LVi, respectivement avec des valeurs calculées azj et hj de l'angle d'azimut théorique et de l'angle de hauteur théorique pour chacune des directions Dj.

Pour la position Pi de l'aéronef AC sur sa trajectoire T, on peut considérer, à la suite de cette comparaison, que la distance réelle entre le récepteur R et l'émetteur E est égale à celle des distances théoriques dj dont la direction Dj présente des valeurs azj de l'angle d'azimut théorique et hj de l'angle de hauteur théorique respectivement les plus proches des valeurs mesurées azDi et hDi de l'angle d'azimut et de l'angle de hauteur de la ligne de visée LVi.

Bien entendu, ce qui a été décrit ci-dessus pour la position Pi de l'aéronef AC, peut être répété pour chaque position P₁, P₂, ..., Pₙ de celui-ci. On obtient donc une série de valeurs estimées de la distance émetteur E - récepteur R au fur et à mesure du déplacement de l'aéronef AC sur sa trajectoire T.

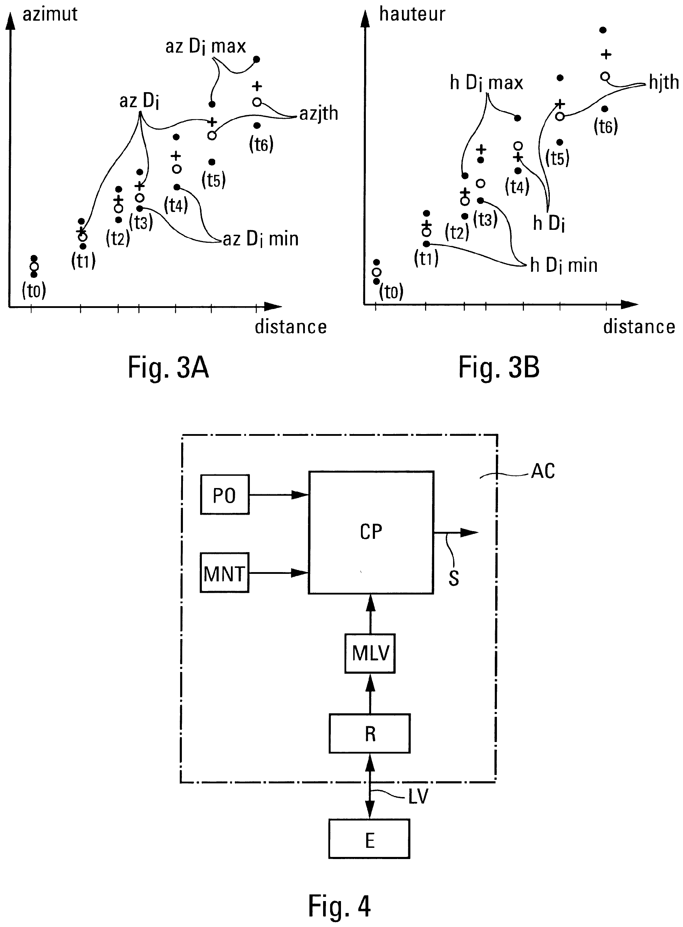

Un tel processus pouvant être sujet à des imprécisions de mesure, une variante préférée du procédé conforme à la présente invention consiste en ce que, comme l'illustrent les figures 3A et 3B :
a') à l'aide du modèle numérique de terrain MNT, on détermine, pour chacune d'une pluralité de positions Pi successives (aux instants t₀, t₁, ..., tₙ) du récepteur R, une valeur de distance maximale Dimax et une valeur de distance minimale Dimin, avec les angles d'azimuts azdimax et azdimin et les angles de hauteur hdimax et hdimin correspondants, délimitant une plage de valeurs de distance dans laquelle se trouve la valeur réelle de la distance entre le récepteur R et l'émetteur E à la position Pi du récepteur R ;
b') à chacune des positions successives Pi du récepteur R, on mesure la valeur de l'angle d'azimut azDi et la valeur de l'angle de hauteur hDi de la direction correspondante de la ligne de visée LVi ;
c') pour chacun d'une pluralité de points pj de la partie mnt du modèle numérique de terrain MNT comprise dans chacune des plages de valeurs de distances obtenues à l'étape a'), on calcule la distance théorique dj séparant ledit point pj et le récepteur R, ainsi que les valeurs de l'angle d'azimut théorique azjth et de l'angle de hauteur théorique hjth de la direction Dj de la distance théorique dj ;
d') on compare les suites des valeurs mesurées d'angle d'azimut azDi et d'angle de hauteur hDi, obtenues à l'étape b'), respectivement aux suites de valeurs d'angle d'azimut théorique azjth et d'angle de hauteur théorique hjth obtenues à l'étape c') ; et
e') on estime que l'évolution de la distance réelle entre le récepteur R et l'émetteur E, lorsque l'aéronef AC se déplace sur sa trajectoire, est représentée par l'évolution de la distance théorique dj, calculée à l'étape c'), pour laquelle les suites de valeurs d'angle d'azimut théorique azjth et d'angle de hauteur théorique hjth sont respectivement les plus proches des suites de valeurs mesurées d'angle d'azimut azdi et d'angle de hauteur hDi de la ligne de visée LVi.

Sur la figure 4, on a représenté schématiquement un dispositif de détection infrarouge conforme à la présente invention, qui est monté à bord de l'aéronef AC et qui comporte le récepteur R, ici sous la forme d'un détecteur infrarouge apte à détecter une émission infrarouge terrestre, formée ici par l'émetteur E. L'aéronef AC comporte un dispositif de positionnement PO lui permettant de connaître sa position à chaque instant et le dispositif de détection infrarouge comporte des moyens de mesure MLV indiquant la direction de la ligne de visée LV sous laquelle le détecteur infrarouge R observe l'émission infrarouge terrestre E, cette direction étant définie par l'angle d'azimut et l'angle de hauteur de la ligne de visée.

Le dispositif de détection infrarouge de la figure 4 comporte de plus des moyens de calcul CP, reliés au dispositif de positionnement PO et aux moyens de mesure MLV, ainsi qu'un modèle numérique de terrain MNT représentatif du terrain dans lequel se trouve l'émission infrarouge E et indiquant la hauteur maximale et la hauteur minimale de ce terrain, ledit modèle numérique de terrain étant également relié auxdits moyens de calcul CP.

À partir des informations qu'ils reçoivent du dispositif de positionnement PO, du modèle numérique de terrain MNT et des moyens de mesure MLV, les moyens de calcul CP sont configurés, conformément à la présente invention :
- pour calculer une valeur de distance minimale et une valeur de distance maximale entre lesquelles se trouve la valeur réelle de la distance séparant ledit détecteur infrarouge de ladite émission infrarouge terrestre ;
- pour calculer une pluralité de distances théoriques intermédiaires comprises entre ladite valeur de distance minimale et ladite valeur de distance maximale ;
- pour calculer pour chacune desdites distances théoriques intermédiaires, l'angle d'azimut et l'angle de hauteur de la direction correspondante ; et
- pour comparer les valeurs calculées de l'angle d'azimut et l'angle de hauteur de chacune desdites distances théoriques intermédiaires avec les valeurs mesurées dé l'angle d'azimut et de l'angle de hauteur de la direction de ladite ligne de visée.

Comme mentionné ci-dessus, lesdits moyens de calcul CP peuvent être configurés, pour délivrer à leur sortie S :
- des informations attribuant, à chaque instant, à la distance séparant le détecteur infrarouge de ladite émission infrarouge terrestre, la valeur de la distance théorique intermédiaire dont les valeurs calculées de l'angle d'azimut et de l'angle de hauteur sont les plus proches des valeurs mesurées de l'angle d'azimut et de l'angle dé hauteur de la direction de ladite ligne de visée ; ou bien
- des informations assimilant l'évolution temporelle de la distance séparant le détecteur infrarouge de ladite infrarouge terrestre à une évolution temporelle de distance théorique intermédiaire pour laquelle des suites de valeurs calculées d'angle d'azimut théorique et d'angle de hauteur théorique sont respectivement les plus proches des suites de valeurs mesurées d'angle d'azimut et d'angle de hauteur de ladite ligne de visée.

De ce qui précède, il ressort que le dispositif de détection infrarouge de la figure 4 trouve une application évidente à la détection de départ de missile.

## Revendications

1. Procédé pour déterminer en continu la distance séparant un récepteur aérien (R) mobile de façon connue sur une trajectoire connue (T) et un émetteur terrestre fixe (E), ledit émetteur étant observé par ledit récepteur suivant une ligne de visée (LVi) de direction variable avec le déplacement dudit récepteur,
**caractérisé en ce qu'**on réalise les opérations suivantes :
a') par la mise en oeuvre d'un modèle numérique de terrain (MNT) qui est représentatif du terrain dans lequel se trouve ledit émetteur fixe (E) et qui indique la hauteur maximale (Hmax) et la hauteur minimale (Hmin) de ce terrain, on détermine, pour chacune d'une pluralité de positions successives dudit récepteur aérien (R) le long de sa trajectoire (T), une valeur de distance maximale (dimax) et une valeur de distance minimale (dimin) délimitant une plage de valeurs de distance dans laquelle se trouve la valeur réelle de la distance entre ledit récepteur et ledit émetteur à la position correspondante dudit récepteur aérien ;
b') à chacune desdites positions successives dudit récepteur aérien, on mesure la valeur de l'angle d'azimut (azDi) et la valeur de l'angle de hauteur (hDi) de la direction correspondante de ladite ligne de visée (LVi) ;
c') pour chacun d'une pluralité de points (pj) de la partie (mnt) dudit modèle numérique de terrain (MNT) comprise dans chacune desdites des plages de valeurs de distance obtenues à l'étape a'), on calcule la distance théorique séparant ledit point et ledit récepteur, ainsi que les valeurs de l'angle d'azimut théorique et de l'angle de hauteur théorique de la direction de ladite distance théorique ;
d') on compare les suites des valeurs mesurées d'angle d'azimut et d'angle de hauteur, obtenues à l'étape b'), respectivement aux suites de valeurs d'angle d'azimut théorique et d'angle de hauteur théorique obtenues à l'étape c') ; et
e') on considère que l'évolution de la distance réelle entre le récepteur et l'émetteur, lorsque ledit récepteur (R) se déplace sur sa trajectoire (T), est représentée par l'évolution de la distance théorique calculée à l'étape c'), pour laquelle les suites de valeurs d'angle d'azimut théorique et d'angle de hauteur théorique sont respectivement les plus proches des suites de valeurs mesurées d'angle d'azimut et d'angle de hauteur de ladite ligne de visée.

2. Dispositif de détection infrarouge,
- qui est monté à bord d'un aéronef (AC) muni d'un dispositif de positionnement (PO) permettant de connaître la position dudit aéronef à chaque instant ; et
- qui comporte un détecteur infrarouge (R) apte à détecter une émission infrarouge terrestre (E), ainsi que des moyens de mesure (MLV) indiquant la direction de la ligne de visée (LVi) sous laquelle ledit détecteur infrarouge (R) observe ladite émission infrarouge (E),
**caractérisé :**
- **en ce que** lesdits moyens de mesure (MLV) délivrent des valeurs d'angle d'azimut et d'angle de hauteur pour la direction de ladite ligne de visée (LVi) ;
- **en ce que** ledit dispositif de détection comporte de plus :
• un modèle numérique de terrain (MNT) qui est représentatif du terrain dans lequel se trouve ladite émission infrarouge terrestre (E) et qui indique la hauteur maximale et la hauteur minimale dudit terrain ; et
• des moyens de calcul (CP) configurés :
∘ pour calculer une valeur de distance minimale et une valeur de distance maximale entre lesquelles se trouve la valeur réelle de la distance séparant ledit détecteur infrarouge de ladite émission infrarouge terrestre ;
∘ pour calculer une pluralité de distances théoriques intermédiaires comprises entre ladite valeur de distance minimale et ladite valeur de distance maximale ;
∘ pour calculer pour chacune desdites distances théoriques intermédiaires, l'angle d'azimut et l'angle de hauteur de la direction correspondante ; et
∘ pour comparer les valeurs calculées de l'angle d'azimut et l'angle de hauteur de chacune desdites distances théoriques intermédiaires avec les valeurs mesurées de l'angle d'azimut et de l'angle de hauteur de la direction de ladite ligne de visée (LVi) ;
- **en ce que** lesdits moyens de calcul (CP) sont configurés pour attribuer, à chaque instant, à la distance séparant le détecteur infrarouge de ladite émission infrarouge terrestre, la valeur de la distance théorique intermédiaire dont les valeurs calculées de l'angle d'azimut et de l'angle dé hauteur sont les plus proches des valeurs mesurées de l'angle d'azimut et de l'angle de hauteur de la direction de ladite ligne de visée (LVi) ; et
- **en ce que** lesdits moyens de calcul (CP) sont configurés pour assimiler l'évolution temporelle de la distance séparant le détecteur infrarouge de ladite infrarouge terrestre à une évolution temporelle de distance théorique intermédiaire pour laquelle des suites de valeurs calculées d'angle d'azimut théorique et d'angle de hauteur théorique sont respectivement les plus proches des suites de valeurs mesurées d'angle d'azimut et d'angle de hauteur de ladite ligne de visée (LVi).

3. Dispositif de détection de départ de missile,
**caractérisé en ce qu'**il comporte les particularités du dispositif de détection infrarouge spécifié sous la revendication 2.

4. Aéronef,
**caractérisé en ce qu'**il est équipé du détecteur de départ de missile spécifié sous la revendication 3.

## Patentansprüche

1. Verfahren zur kontinuierlichen Bestimmung der Entfernung zwischen einem in bekannter Weise auf einer bekannten Bahn (T) beweglichen Luftempfänger (R) und einem festen terrestrischen Sender (E), wobei der Sender von dem Empfänger entlang einer Sichtlinie (LVi) variabler Richtung mit der Bewegung des Empfängers beobachtet wird,
**dadurch gekennzeichnet, dass** die folgenden Vorgänge ausgeführt werden:
a') durch die Implementierung eines digitalen Geländemodells (MNT), das repräsentativ für das Gelände ist, in dem sich der feste Sender (E) befindet und das die Maximalhöhe (Hmax) und die Mindesthöhe (Hmin) dieses Geländes anzeigt, wird für jede aus einer Vielzahl von aufeinanderfolgenden Positionen des Luftempfängers (R) entlang seiner Bahn (T) ein Maximalentfernungswert (dimax) und ein Mindestentfernungswert (dimin) bestimmt, die einen Entfernungswertbereich begrenzen, in dem sich der Istwert der Entfernung zwischen dem Empfänger und dem Sender an der entsprechenden Position des Luftempfängers befindet;
b') an jeder der aufeinanderfolgenden Positionen des Luftempfängers, wird der Wert des Azimuthwinkels (azDi) und der Wert des Höhenwinkels (hDi) der entsprechenden Richtung der Sichtlinie (LVi) gemessen;
c') für jeden von einer Vielzahl von Punkten (pj) des Teils (mnt) des digitalen Geländemodells (MNT), das in jedem der in Schritt a') erhaltenen Entfernungswertbereiche enthalten ist, wird die theoretische Entfernung zwischen dem Punkt und dem Empfänger berechnet, sowie die Werte des theoretischen Azimuthwinkels und des theoretischen Höhenwinkels der Richtung der theoretischen Entfernung;
d') die Sequenzen der in Schritt b') erhaltenen gemessenen Azimuthwinkel- und Höhenwinkelwerte werden jeweils mit den Sequenzen der in Schritt c') erhaltenen gemessenen theoretischen Azimuthwinkel- und Höhenwinkelwerte verglichen; und
e') man geht davon aus, dass die Entwicklung der tatsächlichen Entfernung zwischen dem Empfänger und dem Sender, wenn sich der Empfänger (R) auf seiner Bahn (T) bewegt, durch die Entwicklung der in Schritt c') berechneten theoretischen Entfernung dargestellt wird, für welche die Sequenzen der Werte von theoretischem Azimuthwinkel und theoretischem Höhenwinkel jeweils den Sequenzen von gemessenen Azimuthwinkel- und Höhenwinkelwerten der Sichtlinie am nächsten sind.

2. Infrarot-Detektionsvorrichtung,
- die an Bord eines Luftfahrzeugs (AC) angebracht ist, das mit einer Positionierungsvorrichtung (PO) ausgestattet ist, die ein Erkennen der Position des Luftfahrzeugs zu jeder Zeit ermöglicht; und
- die einen Infrarot-Detektor (R) aufweist, der in der Lage ist, eine terrestrische Infrarot-Emission (E) zu detektieren, sowie Messmittel (MLV), welche die Richtung der Sichtlinie (LVi) anzeigen, unter welcher der Infrarot-Detektor (R) die Infrarot-Emission (E) beobachtet,
**dadurch gekennzeichnet:**
- **dass** die Messmittel (MLV) Azimuthwinkel- und Höhenwinkelwerte für die Richtung der Sichtlinie (LVi) liefern;
- **dass** die Detektionsvorrichtung ferner Folgendes aufweist:
• ein digitales Geländemodell (MNT), das repräsentativ für das Gelände ist, in dem sich die terrestrische Infrarot-Emission (E) befindet, und das die Maximalhöhe und Mindesthöhe des Geländes anzeigt; und
• Berechnungsmittel (CP), die konfiguriert sind:
∘ um einen Mindestentfernungswert und einen Maximalentfernungswert zu berechnen, zwischen denen der Istwert der Entfernung zwischen dem Infrarot-Detektor und der terrestrischen Infrarot-Emission liegt;
∘ um eine Vielzahl von theoretischen Zwischenentfernungen zwischen dem Mindestentfernungswert und dem Maximalentfernungswert zu berechnen;
∘ um für jede der theoretischen Zwischenentfernungen den Azimuthwinkel und den Höhenwinkel der entsprechenden Richtung zu berechnen; und
∘ um die berechneten Werte des Azimuthwinkels und des Höhenwinkels jeder der theoretischen Zwischenentfernungen mit den gemessenen Azimuthwinkel- und Höhenwinkelwerten der Richtung der Sichtlinie (LVi) zu vergleichen;
- **dass** die Berechnungsmittel (CP) konfiguriert sind, um zu jeder Zeit bei der Entfernung zwischen dem Infrarot-Detektor und der terrestrischen Infrarot-Emission den Wert der theoretischen Zwischendistanz zuzuordnen, deren berechnete Azimuthwinkel- und Höhenwinkelwerte den gemessenen Azimuthwinkel- und Höhenwinkelwerten der Richtung der Sichtlinie (LVi) am nächsten sind; und
- **dass** die Berechnungsmittel (CP) konfiguriert sind, um die zeitliche Entwicklung der Entfernung zwischen dem Infrarot-Detektor und dem terrestrischen Infrarot einer zeitlichen Entwicklung der theoretischen Zwischenentfernung anzupassen, für die Sequenzen von berechneten Werten des theoretischen Azimuthwinkels und des theoretischen Höhenwinkels jeweils den Sequenzen von gemessenen Werten von Azimuthwinkel und Höhenwinkel der Sichtlinie (LVi) am nächsten sind.

3. Vorrichtung zur Detektion des Starts eines Flugkörpers, **dadurch gekennzeichnet, dass** sie die Merkmale der in Anspruch 2 spezifizierten Infrarot-Detektionsvorrichtung aufweist.

4. Luftfahrzeug,
**dadurch gekennzeichnet, dass** es mit dem in Anspruch 3 spezifizierten Flugkörperstartdetektor ausgestattet ist.

## Claims

1. Method for continuous determination of the distance between a mobile airborne receiver (R) of known fashion on a known trajectory (T) and a stationary ground transmitter (E), said transmitter being observed by said receiver following a line of sight (LVi) of variable direction upon movement of said transmitter,
**characterised in that** it implements the following operations:
a') by the implementation of a digital terrain model (MNT) which is representative of the terrain on which said stationary transmitter (E) is found and which indicates the maximum elevation (Hmax) and the minimum elevation (Hmin) of this terrain, a maximum distance value (dimax) and a minimum distance value (dimin) are determined, for each of a plurality of successive positions of said airborne receiver (R) for the entirety of its trajectory, defining a range of distance values in which the real value of the distance between said receiver and said transmitter in the corresponding position of said airborne receiver is found;
b') at each of said successive positions of said airborne receiver, the value of the azimuth angle (azDi) and the value of the elevation angle (hDi) of the corresponding direction of said line of sight (LVi) is measured;
c') for each of a plurality of points (pj) of the part (mnt) of said digital terrain model (MNT) included in each of said ranges of distance values obtained in step a'), the theoretical distance between said point and said receiver is calculated, as well as the values of the theoretical azimuth angle and the theoretical elevation angle of the direction of said theoretical distance;
d') the results of the measured values of the azimuth angle and the elevation angle, obtained in step b'), are respectively compared to the results of the theoretical values of the azimuth angle and the theoretical elevation angle obtained in step c'); and
e') it is considered that the progression of the real distance between the receiver and the transmitter, while said receiver (R) moves along its trajectory (T), is represented by the progression of the theoretical distance calculated in step c'), for which the results of the values of the theoretical azimuth angle and the theoretical elevation angle are respectively the closest of the results of the measured azimuth angle and the elevation angle of said line of sight.

2. Infra-red detection device,
- which is mounted on board an aircraft (AC) equipped with a positioning device (PO) which allows the position of said aircraft to be known at every instance; and
- which comprises an infra-red detector (R) able to detect a land-based infra-red emission (E), as well a measurement device (MLV) indicating the direction of the line of sight (LVi) under which said infra-red detector (R) observes said infra-red emission (E),
**characterised:**
- **in that** said measurement means (MLV) delivers values of the azimuth angle and the elevation angle for the direction of said line of sight (LVi);
- **in that** said detection device also comprises:
• a digital terrain model (MNT) which is representative of the terrain on which said land-based infra-red emission (E) is found and which indicates the maximum height and the minimum height of said terrain; and
• configured means of calculation (CP):
∘ to calculate a minimum distance value and a maximum distance value between which the real value of the distance between said infra-red detector and said land-based infra-red emission is found;
∘ to calculate a plurality of theoretical intermediate distances included between said minimum distance value and said maximum distance value;
∘ to calculate for each of said theoretical intermediate distances, the azimuth angle and the elevation angle of the corresponding direction; and
∘ to compare the calculated values of the azimuth angle and the elevation angle of each of said theoretical intermediate distances with the measured values of the azimuth angle and the elevation angle of the direction of said line of sight (LVi);
- **in that** said means of calculation (CP) are configured to attribute, at every instance, the value of the theoretical intermediate distance of which the calculated values of the azimuth angle and the elevation angle are the closest of the measured values of the azimuth angle and the elevation angle of the direction of said line of sight (LVi) to the distance between the infra-red detector and said land-based infra-red emission; and
- **in that** said means of calculation (CP) are configured to assimilate the progression over time of the distance between the infra-red detector and said land-based infra-red emission into a progression over time of theoretical intermediate distance for which the results of the calculated values of the theoretical azimuth angle and the theoretical elevation angle are respectively the closest of the results of the measured values of the azimuth angle and the elevation angle of said line of sight (LVi).

3. Missile launch detection device,
**characterised in that** it comprises the specific features of the infra-red detection device according to claim 2.

4. Aircraft,
**characterised in that** it is equipped with the missile launch detector according to claim 3.
